# FASCICULE DE BREVET EUROPEEN

(11) **EP 3 666 568 B1**
(45) Date de publication et mention de la délivrance du brevet: **01.09.2021**
(21) Numéro de dépôt: 19214632.2
(22) Date de dépôt: 10.12.2019
(51) Int. Cl.: B60J 10/265, B60J 10/79, B60R 13/04

(54) **KIT ET PROCÉDÉ D'HABILLAGE D'UN RAIL DE PORTE D'UN VÉHICULE**
KIT UND VERFAHREN ZUR VERKLEIDUNG EINER TÜRSCHIENE EINES FAHRZEUGS
KIT AND METHOD FOR COVERING A RAIL OF A VEHICLE DOOR

(30) Priorité: 10.12.2018 FR 1872635
(43) Date de publication de la demande: 17.06.2020
(73) Titulaire: HUTCHINSON, 75008 Paris (FR)
(72) Inventeur: BLOTTIAU, Olivier, 45120 CEPOY (FR); LAJOUX, Cyril, 45700 VIMORY (FR); GAMBIER, Anne, 75008 PARIS (FR)
(74) Mandataire: Gevers & Orès

(56) Documents cités:
- DE-A1-102004 035 380
- DE-A1-102015 004 982
- GB-A- 2 515 525
- GB-A- 2 557 664

## Description

### Domaine technique de l'invention

La présente invention concerne un kit et un procédé d'habillage d'un rail de porte d'un véhicule.

### Arrière-plan technique

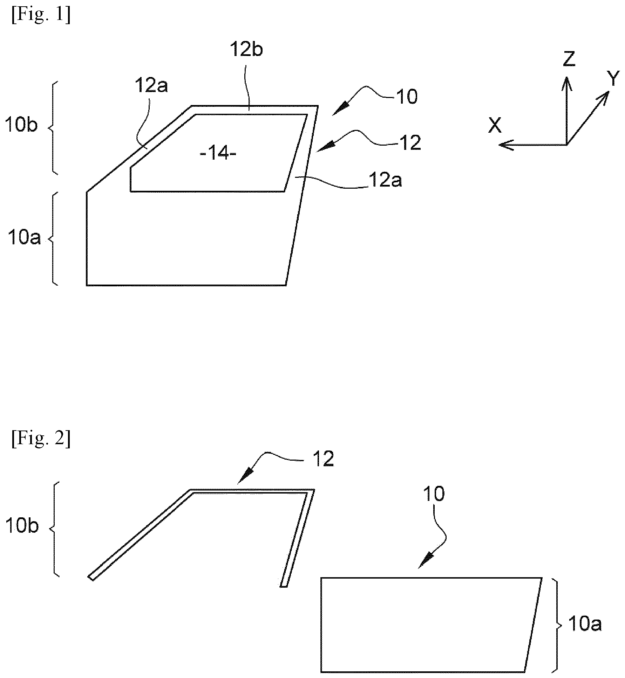

Un véhicule automobile comprend des portes qui comportent chacune en général au moins une vitre. Comme cela est visible à la figure 1, une porte 10 comprend une partie basse 10a et une partie haute 10b qui forme un cadre 12 destiné à entourer la vitre 14. Lorsque cette vitre 14 est mobile, elle peut être déplacée de la partie haute 10b dans la partie basse 10a. Le cadre 12 a une forme générale en U inversé et comprend deux rails latéraux 12a reliés par un rail transversal 12b. Les rails latéraux 12a sont en général appelés des montants du fait de leur orientation sensiblement verticale.

Les parties haute 10b et basse 10a de la porte peuvent être formées d'une seule pièce, comme cela est schématiquement représenté à la figure 1, ou bien de deux pièces ou plus fixées ensemble, comme cela est représenté à la figure 2. La présente invention s'applique à ce type de porte à partie haute et donc à cadre et ne traite donc pas des portes sans cadre.

La porte est en général fabriquée à partir d'une ou plusieurs tôles qui peuvent être embouties, soudées, rivetées, etc. La porte est de plus en général habillée pour améliorer son esthétique. C'est notamment le cas de l'un de ses montants de pied-milieu sur lesquels un organe de finition tel qu'un enjoliveur peut être rapporté et fixé.

Pour cela, il existe un ensemble d'habillage comportant un joint d'étanchéité destiné à coopérer avec la vitre de la porte le long du montant, et un enjoliveur destiné à améliorer l'esthétique de la porte le long du montant.

Dans la technique actuelle, un constructeur automobile demande à un fournisseur de lui fournir un ensemble d'habillage selon un aspect esthétique recherché et pour une référence de porte bien définie. En fonction des spécificités de cette porte et en particulier de son montant, le fournisseur concevra donc un ensemble particulier adapté.

Parmi les aspects esthétiques qui peuvent être recherchés par un constructeur, il y a l'aspect « flush » qui consiste à aligner une surface extérieure de l'enjoliveur avec une surface extérieure de la vitre de la porte. Cet aspect « lisse » est particulièrement apprécié actuellement de la clientèle. Par opposition à cet aspect « flush », il existe un aspect esthétique plus classique que l'on peut appeler « non flush », qui consiste à avoir un écart entre les surfaces extérieures précitées. Les documents DE 10 2004 035380 A1 et DE 10 2015 004982 A1 divulguent respectivement des ensembles d'habillage << flush >> et << non flush >>.

Dans la technique actuelle, on comprend donc qu'un fournisseur devra concevoir un ensemble d'habillage pour un aspect esthétique donné et pour une référence de porte particulière.

La présente invention propose un perfectionnement à cette situation.

### Résumé de l'invention

L'invention propose à cet effet un kit d'habillage d'un rail de porte d'un véhicule, comprenant un premier ensemble d'habillage comportant un premier organe d'étanchéité destiné à coopérer avec une vitre de la porte le long dudit rail, et un premier organe de finition destiné à améliorer l'esthétique de la porte le long dudit rail, le premier ensemble comportant des premiers éléments de fixation sur ledit rail,
caractérisé en ce qu'il comprend un second ensemble d'habillage comportant un second organe d'étanchéité destiné à coopérer avec une vitre de la porte le long dudit rail, et un second organe de finition destiné à améliorer l'esthétique de la porte le long dudit rail, le second ensemble comportant des seconds éléments de fixation sur ledit rail,
les premier et second ensembles étant tous les deux aptes à être montés sur le rail d'une même porte, et un seul de ces ensembles étant monté sur ce rail en fonction d'un aspect esthétique recherché parmi un premier aspect appelé « flush » et un second aspect appelé « non flush »,

le premier ensemble étant monté sur le rail si le premier aspect « flush » est recherché, ce premier ensemble étant configuré pour que ledit organe de finition ait une surface extérieure alignée avec une surface extérieure de la vitre de la porte, lorsque le premier ensemble est fixé sur le rail de cette porte, et
le second ensemble étant monté sur le rail si le second aspect « non flush » est recherché, ce second ensemble étant différent du premier ensemble et configuré pour que ledit organe de finition ait une surface extérieure écartée d'une surface extérieure de la vitre de la porte, lorsque le second ensemble est fixé sur le rail de cette porte.

Il est ainsi proposé un kit comportant deux ensembles d'habillage destinés à habiller une même référence ou un même modèle de porte et en particulier un même rail de porte. Naturellement, un seul des ensembles sera utilisé par le constructeur automobile mais celui-ci aura le choix d'utiliser l'un ou l'autre des ensembles en fonction de l'aspect esthétique recherché et par exemple de la gamme de la voiture. Pour une gamme standard, un aspect « non flush » pourrait être utilisé alors que pour une gamme luxe, un aspect « flush » pourrait être utilisé.

Le kit selon l'invention peut comprendre une ou plusieurs des caractéristiques suivantes, prises isolément les unes des autres ou en combinaison les unes avec les autres :
- l'organe d'étanchéité et l'organe de finition de chaque ensemble sont formés par deux pièces distinctes, l'organe de finition étant configuré pour coopérer avec lesdits éléments de fixation et pour maintenir l'organe d'étanchéité du même ensemble ;
- l'organe d'étanchéité de chaque ensemble est un joint de coulisse et a une portion allongée ayant une section en forme de U dans laquelle est destiné à être logé et à coulisser la vitre ou un élément de guidage porté par la vitre ;
- l'organe de finition est configuré pour maintenir serré l'organe d'étanchéité du même ensemble contre une portion dudit rail ;
- l'organe de finition de chaque ensemble est un enjoliveur ;
- l'organe de finition de chaque ensemble comprend des plots d'appui sur ledit rail ;
- l'organe de finition de chaque ensemble comprend des pattes d'accrochage sur ledit rail ;
- l'organe de finition de chaque ensemble est indifféremment constitué d'une seule ou de plusieurs éléments et matériaux (exemple : pièce monobloc monomatière injectée, ou pièce monobloc bi-injectée, ou encore pièce composée d'une partie d'aspect rapportée (collée ou adhésivée ou encliquetée, etc...) sur une deuxième partie de fixation, la partie d'aspect pouvant être adaptée (couleur, texture, brillance) suivant l'effet désiré ;
- l'organe de finition de chaque ensemble comprend une paroi destinée à s'étendre le long dudit rail et à recouvrir ce rail, le premier organe de finition étant configuré, lorsqu'il est fixé sur le rail, pour que sa paroi soit située à une distance d1 du rail, et le second organe de finition étant configuré, lorsqu'il est fixé sur le rail, pour que sa paroi soit située à une distance d2 du rail qui est supérieure à d1 ;
- les éléments de fixation de chaque ensemble comprennent des vis ou pions ou rivets configurés pour traverser des orifices dudit rail et pour être engagés dans des trous de l'organe de finition.

La présente invention concerne également un procédé d'habillage d'un rail de porte d'un véhicule au moyen d'un kit selon l'une des revendications précédentes, comprenant les étapes consistant à :
- choisir un aspect esthétique parmi l'aspect « flush » et « non flush », et
- fixer l'ensemble correspondant à l'aspect esthétique choisi sur le rail de porte.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
la figure 1 est une vue très schématique d'une porte d'un véhicule, dont les parties haute et basse sont formées d'une seule pièce,
la figure 2 est une vue très schématique d'une autre porte d'un véhicule, dont les parties haute et basse sont formées de pièces différentes qui sont assemblées,
la figure 3 est une vue schématique en coupe transversale d'un ensemble d'habillage d'un rail supérieur de porte d'un véhicule,
la figure 4 est une vue schématique en coupe transversale d'un ensemble d'habillage d'un rail latéral de porte d'un véhicule,
la figure 5 est une vue schématique en coupe transversale d'un ensemble d'habillage d'un rail supérieur de porte d'un véhicule,
la figure 6 est une vue schématique en coupe transversale d'un ensemble d'habillage de rails latéraux de pied milieu d'un véhicule,
la figure 7 est une vue schématique en coupe transversale d'un des ensembles d'habillage selon un premier mode de réalisation d'un kit selon l'invention,
la figure 8 est une vue schématique en coupe transversale d'un autre des ensembles d'habillage selon un premier mode de réalisation d'un kit selon l'invention,
la figure 9 est une vue schématique en coupe transversale similaire à celles des figures 7 et 8 et montrant les deux ensembles d'habillage superposés du premier mode de réalisation du kit afin d'apprécier les différences de position entre leurs organes d'étanchéité et de finition,
la figure 10 est une vue schématique en coupe transversale d'un des ensembles d'habillage selon un deuxième mode de réalisation d'un kit selon l'invention,
la figure 11 est une vue schématique en coupe transversale d'un autre des ensembles d'habillage selon un deuxième mode de réalisation d'un kit selon l'invention,
la figure 12 est une vue schématique en coupe transversale d'un des ensembles d'habillage selon un troisième mode de réalisation d'un kit selon l'invention,
la figure 13 est une vue schématique en coupe transversale d'un autre des ensembles d'habillage selon un troisième mode de réalisation d'un kit selon l'invention,
la figure 14 est une vue schématique en perspective d'un organe de finition, et la figure 14a est une vue à plus grande échelle d'un détail de la figure 14,
la figure 15 est une vue schématique en perspective éclatée d'éléments d'une partie haute de porte d'un véhicule,
la figure 16 est une vue schématique en coupe transversale d'un des ensembles d'habillage selon une variante de réalisation, et
la figure 17 est une vue schématique en coupe transversale et à plus grande échelle d'un des ensembles d'habillage selon une autre variante.

### Description détaillée de l'invention

Les figures 1 et 2 ont été décrites dans ce qui précède.

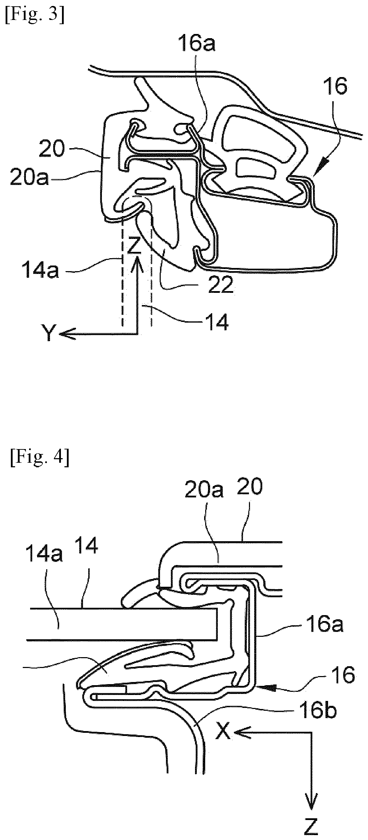

Les figures 3 à 6 illustrent différents rails 16 de véhicules automobiles. Cela démontre que les rails 16 des véhicules peuvent être très différents de par leurs formes, dimensions et compositions. Ils peuvent comprendre une ou plusieurs peau(x) ou tôle(s) 16a, 16b, 16c qui est/sont mise(s) en forme par emboutissage, pliage, roulage, par exemple. Les peaux ou tôles 16a, 16b, 16c sont assemblées l'une sur l'autre, par exemple par soudage, rivetage, vissage, etc.

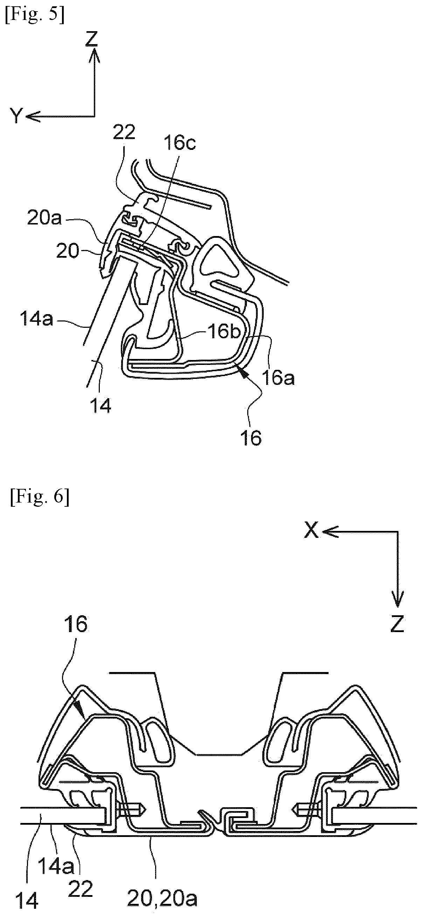

La figure 3 représente une vue en coupe d'un rail supérieur 12b et la figure 4 représente une vue en coupe d'un rail latéral 12a. La figure 5 représente une vue en coupe d'un rail supérieur 12b et la figure 6 représente une vue en coupe de rails latéraux 12a de pied milieu.

Dans la description qui suit, les rails, qui sont supérieurs ou latéraux, seront désignés par la même référence 16.

Les rails 16 sont habillés avec des ensembles 18 comportant au moins un organe d'étanchéité 22 et un organe de finition 20. Les organes 20, 22 peuvent être formés d'une seule pièce (figures 3, 4 et 6) ou de deux pièces distinctes (figure 5).

Les organes 20, 22 s'étendent le long et sur le rail 16 et sont destinés à le cacher tout en assurant une étanchéité avec la vitre 14, le rail 16 ou un autre élément de la carrosserie du véhicule.

Les ensembles d'habillage représentés dans les figures 3 à 6 sont du type « non flush », c'est-à-dire que leurs organes de finition 20 comprennent une surface extérieure 20a visible par un utilisateur située à l'extérieur du véhicule, qui n'est pas alignée avec la surface extérieure 14a de la vitre 14.

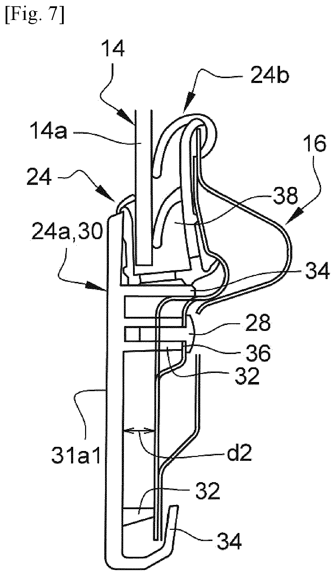

Les figures 7 à 9 illustrent le principe de l'invention qui consiste à proposer sous la forme d'un kit, deux ensembles d'habillage 24, 26 destinés à procurer des aspects esthétiques différents, respectivement « flush » et « non flush », et aptes à être montés sur une même référence de porte et donc de rail 16.

Chaque ensemble d'habillage 24, 26 comprend un organe d'étanchéité 24b, 26b destiné à coopérer avec une vitre 14 de la porte le long du rail 16, et un organe de finition 24a, 26a destiné à améliorer l'esthétique de la porte le long du rail. Chaque ensemble 24, 26 comporte en outre des éléments 28 de fixation sur le rail 16.

Les ensembles 24, 26 sont tous les deux aptes à être montés sur le rail 16. Un seul de ces ensembles y est monté en fonction de l'aspect esthétique recherché parmi « flush » et « non flush ».

L'ensemble d'habillage 24 de la figure 7 est destiné à procurer l'aspect « non flush » recherché. L'organe de finition 24a, qui se présente ici sous la forme d'un enjoliveur, est configuré pour avoir une surface extérieure 30a qui est écartée de la surface extérieure 14a de la vitre 14 lorsque l'ensemble 24 est fixé sur le rail 16.

Dans l'exemple représenté, l'organe 24a comprend une paroi 30 sensiblement plane destinée à s'étendre le long du rail 16 et à le recouvrir au moins partiellement. La surface extérieure 30a est portée par cette paroi 30 qui comprend une surface intérieure 30b faisant face au rail et sur lequel sont formées en saillie des plots 32 d'appui sur le rail.

Des pattes 34 d'appui et/ou d'accrochage peuvent en outre s'étendre depuis la paroi 30 vers le rail 16 et coopérer avec ce rail pour assurer le positionnement et le maintien en position de l'organe 24a sur le rail 16.

Les éléments de fixation 28 sont ici formés par des vis ou des pions qui sont configurés pour traverser des orifices 36 prévus sur le rail et pour être engagés, par exemple par vissage, dans des trous 38 de l'organe de finition tels que des trous formés dans des plots d'appui 32.

Dans l'exemple représenté, l'organe 24a comprend un bord longitudinal sur lequel est située une patte d'accrochage 34, et un bord longitudinal opposé qui s'étend à distance d'une portion du rail pour définir avec celle-ci une gorge longitudinale 38 de réception de l'organe d'étanchéité 24b.

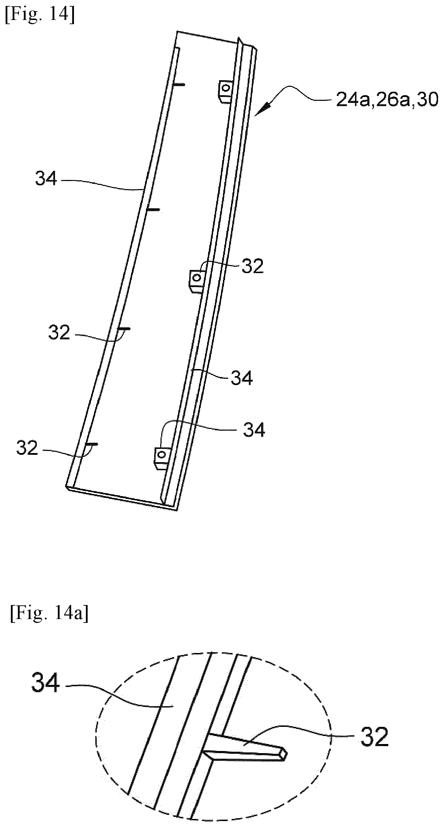

Un organe 24a est mieux visible aux figures 14 et 14a.

Dans l'exemple représenté, cet organe d'étanchéité 24b est un joint de coulisse qui a une portion allongée ayant une section en forme de U dans laquelle est destiné à être logé et à coulisser la vitre 14.

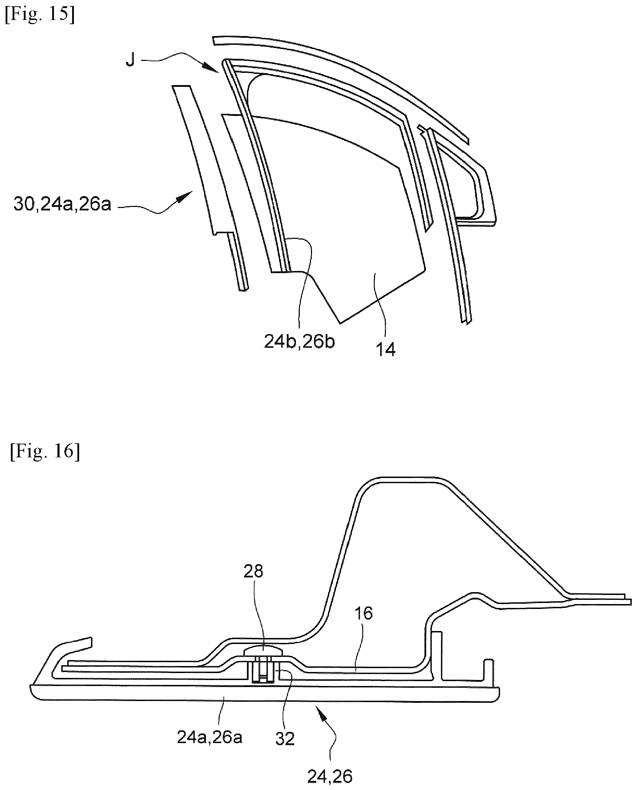

La figure 15 permet de visualiser certaines pièces de la partie haute d'une porte et notamment un joint de coulisse J qui est un organe d'étanchéité bien connu d'un homme du métier spécialisé dans l'étanchéité d'un véhicule automobile.

Dans la position montée représentée à la figure 7, la paroi 30 est située à une distance d2 du rail 16. La vitre 14 est engagée dans l'organe d'étanchéité 24b logé dans la gorge 38 et les surfaces 30a, 14a sont écartées l'une par rapport à l'autre.

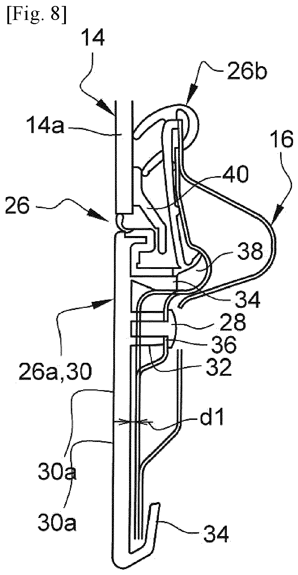

L'ensemble d'habillage 26 de la figure 8 est destiné à procurer l'aspect « flush » recherché. L'organe de finition 26a, qui se présente ici sous la forme d'un enjoliveur, est configuré pour avoir une surface extérieure 30a qui est alignée avec la surface extérieure 14a de la vitre 14 lorsque l'ensemble 26 est fixé sur le rail 16.

Dans l'exemple représenté, l'organe 26a comprend une paroi 30 sensiblement plane destinée à s'étendre le long du rail 16 et à le recouvrir au moins partiellement. La surface extérieure 30a est portée par cette paroi 30 qui comprend une surface intérieure 30b faisant face au rail et sur laquelle sont formées en saillie des plots 32 d'appui sur le rail.

Des pattes 34 d'appui et/ou d'accrochage peuvent en outre s'étendre depuis la paroi 30 vers le rail 16 et coopérer avec ce rail pour assurer le positionnement et le maintien en position de l'organe 24a sur le rail 16.

Les éléments de fixation 28 sont ici formés par des vis ou des pions qui sont configurés pour traverser des orifices 36 prévus sur le rail et pour être engagés, par exemple par vissage, dans des trous 38 de l'organe de finition tels que des trous formés dans des plots d'appui 32.

Dans l'exemple représenté, l'organe 26a comprend un bord longitudinal sur lequel est située une patte d'accrochage 34, et un bord longitudinal opposé qui s'étend à distance d'une portion du rail pour définir avec celle-ci une gorge longitudinale 38 de réception de l'organe d'étanchéité 26b.

Un organe 24a est mieux visible aux figures 14 et 14a.

Dans l'exemple représenté, cet organe d'étanchéité 26b est un joint de coulisse qui a une portion allongée ayant une section en forme de U dans laquelle est destiné à être logé et à coulisser un guide 40 porté par la vitre 14.

La figure 15 permet de visualiser la composition de la partie haute d'une porte et notamment un joint de coulisse J qui est un organe d'étanchéité bien connu d'un homme du métier spécialisé dans l'étanchéité d'un véhicule automobile.

Dans la position montée représentée à la figure 8, la paroi 30 est située à une distance d1 du rail 16, cette distance d1 étant plus faible que la distance d2 précitée. La vitre 14 est alignée avec la paroi 30 et leurs surfaces 30a, 14a sont alignées.

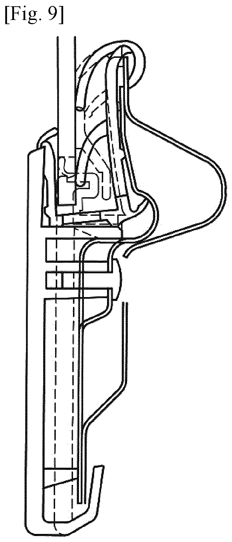

La figure 9 permet de constater la différence de positionnement des ensembles 24, 26 et en particulier de leurs organes 24a, 24b, 26a, 26b du fait de la différence entre les distances d1, d2 notamment.

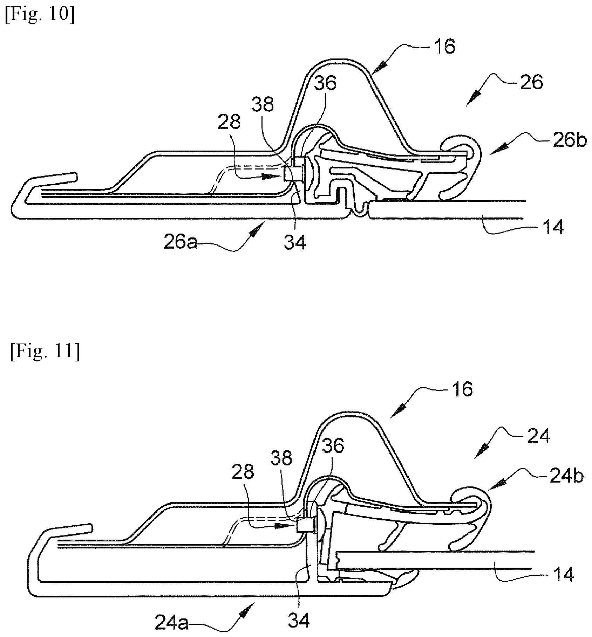

Les figures 10 et 11 d'une part, et 12 et 13 d'autre part, montrent des variantes de réalisation du kit selon l'invention.

La figure 10 illustre un ensemble d'habillage 26 destiné à procurer un aspect « flush » et la figure 11 illustre un ensemble d'habillage 24 destiné à procurer un aspect « non flush » pour un même kit d'habillage.

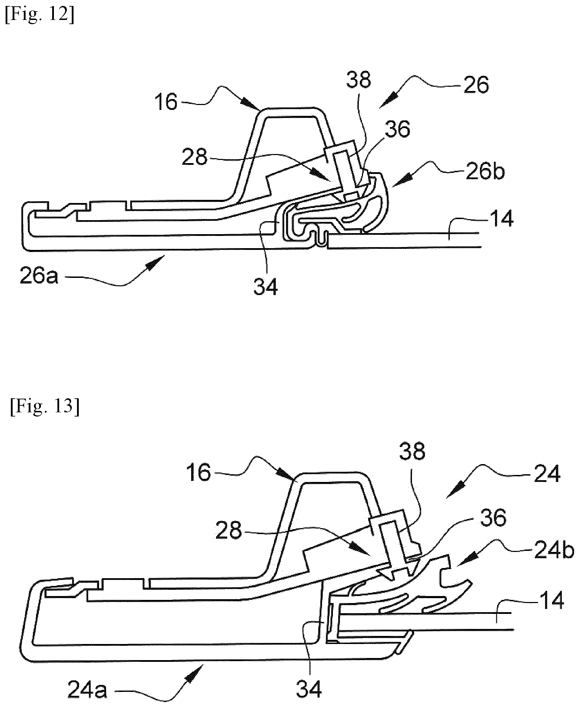

La figure 12 illustre un ensemble d'habillage 26 destiné à procurer un aspect «flush» et la figure 13 illustre un ensemble d'habillage 24 destiné à procurer un aspect « non flush » pour un même kit d'habillage.

Les éléments de fixation 28 des figures 10 à 13 sont ici formés par des vis ou des pions qui sont configurés pour traverser des orifices 36 d'une patte 34 de l'organe de finition 24a, 26a et pour être engagés, par exemple par vissage, dans des trous 38 du rail 16. Ces vis ou pions comprennent des têtes qui sont destinées à être cachées par l'organe d'étanchéité 24b, 26b. Ce dernier doit donc être retiré pour avoir accès aux éléments de fixation 28.

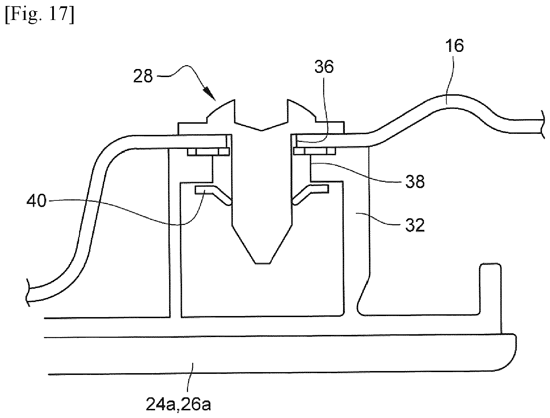

Les figures 16 et 17 sont des vues similaires à celles des figures 7 à 13 et montrant d'autres variantes de réalisation de l'invention.

Ces figures montrent par exemple que l'organe de finition 24a, 26a peut être formé à partir de deux matières distinctes. L'organe d'étanchéité 24b, 26b n'est pas illustré aux figures 16 et 17.

Par ailleurs, la figure 17 montre un exemple de réalisation d'un élément de fixation 28 qui traverse un orifice 36 et un trou 38 et est retenu dans ce trou par l'intermédiaire d'au moins une rondelle 40 d'encliquetage élastique ou d'insertion en force située dans le trou 38.

## Revendications

1. Kit d'habillage d'un rail (16) de porte d'un véhicule, comprenant un premier ensemble d'habillage (26) comportant un premier organe d'étanchéité (26b) destiné à coopérer avec une vitre (14) de la porte le long dudit rail, et un premier organe de finition (26a) destiné à améliorer l'esthétique de la porte le long dudit rail, le premier ensemble comportant des premiers éléments (28) de fixation sur ledit rail,
**caractérisé en ce qu'**il comprend un second ensemble d'habillage (24) comportant un second organe d'étanchéité (24b) destiné à coopérer avec une vitre de la porte le long dudit rail, et un second organe de finition (24a) destiné à améliorer l'esthétique de la porte le long dudit rail, le second ensemble comportant des seconds éléments (28) de fixation sur ledit rail,
les premier et second ensembles (26, 24) étant tous les deux aptes à être montés sur le rail (16) d'une même porte, et un seul de ces ensembles étant monté sur ce rail en fonction d'un aspect esthétique recherché parmi un premier aspect appelé « flush » et un second aspect appelé « non flush »,
le premier ensemble (26) étant monté sur le rail (16) si le premier aspect « flush » est recherché, ce premier ensemble étant configuré pour que ledit organe de finition (26a) ait une surface extérieure (30a) alignée avec une surface extérieure (14a) de la vitre (14) de la porte, lorsque le premier ensemble est fixé sur le rail de cette porte, et
le second ensemble (24) étant monté sur le rail (16) si le second aspect « non flush » est recherché, ce second ensemble étant différent du premier ensemble et configuré pour que ledit organe de finition (24a) ait une surface extérieure (30a) écartée d'une surface extérieure (14a) de la vitre (14) de la porte, lorsque le second ensemble est fixé sur le rail de cette porte.

2. Kit selon la revendication 1, dans lequel l'organe d'étanchéité (24b, 26b) et l'organe de finition (24a, 26a) de chaque ensemble (24, 26) sont formés par deux pièces distinctes, l'organe de finition étant configuré pour coopérer avec lesdits éléments de fixation (28) et pour maintenir l'organe d'étanchéité du même ensemble.

3. Kit selon l'une des revendications précédentes, dans lequel l'organe d'étanchéité (24b, 26b) de chaque ensemble (24, 26) est un joint de coulisse et a une portion allongée ayant une section en forme de U dans laquelle est destiné à être logé et à coulisser la vitre (14) ou un élément de guidage (40) porté par la vitre.

4. Kit selon l'ensemble des revendications 2 et 3, dans lequel l'organe de finition (24a, 26a) est configuré pour maintenir serré l'organe d'étanchéité (24b, 26b) du même ensemble contre une portion dudit rail (16).

5. Kit selon l'une des revendications précédentes, dans lequel l'organe de finition (24a, 26a) de chaque ensemble (24, 26) est un enjoliveur.

6. Kit selon l'une des revendications précédentes, dans lequel l'organe de finition (24a, 26a) de chaque ensemble (24, 26) comprend des plots (32) d'appui sur ledit rail (16).

7. Kit selon l'une des revendications précédentes, dans lequel l'organe de finition (24a, 26a) de chaque ensemble (24, 26) comprend des pattes (34) d'accrochage sur ledit rail.

8. Kit selon l'une des revendications précédentes, dans lequel l'organe de finition (24a, 26a) de chaque ensemble (24, 26) comprend une paroi (30) destinée à s'étendre le long dudit rail (16) et à recouvrir ce rail, le premier organe de finition (26a) étant configuré, lorsqu'il est fixé sur le rail, pour que sa paroi soit située à une distance d1 du rail, et le second organe de finition étant configuré, lorsqu'il est fixé sur le rail, pour que sa paroi soit située à une distance d2 du rail qui est supérieure à d1.

9. Kit selon l'une des revendications précédentes, dans lequel les éléments de fixation (28) de chaque ensemble (24, 26) comprennent des vis ou pions configurés pour traverser des orifices (36) dudit rail (16) et pour être engagés dans des trous de l'organe de finition (24a, 26a).

10. Procédé d'habillage d'un rail (16) de porte d'un véhicule au moyen d'un kit selon l'une des revendications précédentes, comprenant les étapes consistant à :
- choisir un aspect esthétique parmi les aspects « flush » et « non flush », et
- fixer l'ensemble (24, 26) correspondant à l'aspect esthétique choisi sur le rail de porte.

## Patentansprüche

1. Verkleidungsbausatz einer Türschiene (16) eines Fahrzeugs, das mindestens eine erste Verkleidungsanordnung (26) umfasst, die ein erstes Abdichtorgan (26b) umfasst, das dazu bestimmt ist, mit einer Scheibe (14) der Tür entlang der Schiene zusammenzuwirken, und ein erstes Endfertigungsorgan (26a), das dazu bestimmt ist, die Ästhetik der Tür entlang der Schiene zu verbessern, wobei die erste Anordnung erste Elemente (28) zur Befestigung auf der Schiene umfassen,
**dadurch gekennzeichnet, dass** es eine zweite Verkleidungsanordnung (24) umfasst, die ein zweites Abdichtorgan (24b) umfasst, das dazu bestimmt ist, mit einer Scheibe der Tür entlang der Schiene zusammenzuwirken, und ein zweites Endfertigungsorgan (24a), das dazu bestimmt ist, die Ästhetik der Tür entlang der Schiene zu verbessern, wobei die zweite Anordnung zweite Elemente (28) zur Befestigung auf der Schiene umfasst, wobei die erste und die zweite Anordnung (26, 24) beide dazu geeignet sind, auf die Schiene (16) einer selben Tür montiert zu sein, und eine einzige dieser Einheiten auf der Schiene in Abhängigkeit von einem angestrebten ersten ästhetischen Aussehen, das "bündig" genannt wird, und einem zweiten Aussehen, das "nicht bündig" genannt wird, montiert ist,
wobei die erste Anordnung (26) auf der Schiene (16) montiert ist, falls das erste "bündige" Aussehen angestrebt ist, wobei diese erste Anordnung dazu konfiguriert ist, dass das Endfertigungsorgan (26a) eine Außenoberfläche (30a) aufweist, die mit einer Außenoberfläche (14a) der Scheibe (14) der Tür ausgerichtet ist, wenn die erste Anordnung auf der Schiene dieser Tür befestigt ist, und
wobei die zweite Anordnung (24) auf der Schiene (16) montiert ist, falls das zweite "nicht bündige" Aussehen angestrebt ist, wobei diese zweite Anordnung von der ersten Anordnung unterschiedlich und dazu konfiguriert ist, dass das Endfertigungsorgan (24a) eine Außenoberfläche (30a) aufweist, die von einer Außenoberfläche (14a) der Scheibe (14) der Tür beabstandet ist, wenn die zweite Anordnung auf der Schiene dieser Tür befestigt ist.

2. Bausatz nach Anspruch 1, wobei das Abdichtorgan (24b, 26b) und das Endfertigungsorgan (24a, 26a) jeder Anordnung (24, 26) aus zwei getrennten Teilen gebildet sind, wobei das Endfertigungsorgan dazu konfiguriert ist, mit den Befestigungselementen (28) zusammenzuwirken, um das Abdichtorgan derselben Anordnung zu halten.

3. Bausatz nach einem der vorstehenden Ansprüche, wobei das Abdichtorgan (24b, 26b) jeder Anordnung (24, 26) ein Führungsgelenk ist und einen länglichen Abschnitt aufweist, der einen Querschnitt in U-Form aufweist, in dem die Scheibe (14) oder ein Führungselement (40), das von der Scheibe getragen wird, aufgenommen ist und gleiten soll.

4. Bausatz der Anordnung der Ansprüche 2 und 3, wobei das Endfertigungsorgan (24a, 26a) dazu konfiguriert ist, das Abdichtorgan (24b, 26b) derselben Anordnung gegen einen Abschnitt der Schiene (16) gepresst zu halten.

5. Bausatz nach einem der vorstehenden Ansprüche, wobei das Endfertigungsorgan (24a, 26a) jeder Anordnung (24, 26) eine Zierblende ist.

6. Bausatz nach einem der vorstehenden Ansprüche, wobei das Endfertigungsorgan (24a, 26a) jeder Anordnung (24, 26) Stücke (32) zur Auflage auf der Schiene (16) umfasst.

7. Bausatz nach einem der vorstehenden Ansprüche, wobei das Endfertigungsorgan (24a, 26a) jeder Anordnung (24, 26) Pratzen (34) zum Aufhängen auf der Schiene umfasst.

8. Bausatz nach einem der vorstehenden Ansprüche, wobei das Endfertigungsorgan (24a, 26a) jeder Anordnung (24, 26) eine Wand (30) umfasst, die dazu bestimmt ist, sich entlang der Schiene (16) zu erstrecken und diese Schiene abzudecken, wobei das erste Endfertigungsorgan (26a) konfiguriert ist, damit, wenn es auf der Schiene befestigt ist, seine Wand in einem Abstand d1 von der Schiene liegt, und das zweite Endfertigungsorgan konfiguriert ist, damit, wenn es auf der Schiene befestigt ist, seine Wand in einem Abstand d2 von der Schiene, der größer ist als d1, liegt.

9. Bausatz nach einem der vorstehenden Ansprüche, wobei die Befestigungselemente (28) jeder Anordnung (24, 26) Schrauben oder Zapfen umfassen, die dazu konfiguriert sind, Öffnungen (36) der Schiene (16) zu durchqueren und in Löcher des Endfertigungsorgans (24a, 26a) eingefügt zu werden.

10. Verkleidungsverfahren einer Türschiene (16) eines Fahrzeugs mittels eines Bausatzes nach einem der vorstehenden Ansprüche, das die Schritte umfasst, die bestehen aus:
- Auswählen eines ästhetischen Aussehens aus den Aussehen "bündig" und "nicht bündig",
und
- Befestigen der Anordnung (24, 26), die dem ausgewählten ästhetischen Aussehen entspricht, auf der Türschiene.

## Claims

1. Kit for covering a rail (16) of a vehicle door, comprising a first covering assembly (26) comprising a first sealing member (26b) intended to cooperate with a window (14) of the door along said rail, and a first finishing member (26a) intended to improve the aesthetics of the door along said rail, the first assembly comprising first elements (28) for fastening to said rail,
**characterised in that** it comprises a second covering assembly (24) comprising a second sealing member (24b) intended to cooperate with a window of the door along said rail, and a second finishing member (24a) intended to improve the aesthetics of the door along said rail, the second assembly comprising second elements (28) for fastening to said rail,
the first and second assemblies (26, 24) both being capable of being mounted on the rail (16) of the same door, and only one of these assemblies being mounted on this rail as a function of an aesthetic aspect sought among a first aspect called "flush" and a second aspect called "non-flush",
the first assembly (26) being mounted on the rail (16) if the first "flush" aspect is sought, this first assembly being configured so that said finishing member (26a) has an outer surface (30a) aligned with an outer surface (14a) of the window (14) of the door, when the first assembly is secured to the rail of the door, and
the second assembly (24) being mounted on the rail (16) if the second "non-flush" aspect is sought, this second assembly being different from the first assembly and configured so that said finishing member (24a) has an outer surface (30a) spaced from an outer surface (14a) of the window (14) of the door when the second assembly is fastened to the rail of that door.

2. Kit according to claim 1, wherein the sealing member (24b, 26b) and the finishing member (24a, 26a) of each assembly (24, 26) are formed by two separate pieces, the finishing member being configured to cooperate with said fastening elements (28) and to hold the sealing member of the same assembly.

3. Kit according to one of the preceding claims, wherein the sealing member (24b, 26b) of each assembly (24, 26) is a slide seal and has an elongated portion having a U-shaped cross-section in which the window (14) or a guide element (40) carried by the window is intended to be housed and slid.

4. Kit according to the assembly of claims 2 and 3, wherein the finishing member (24a, 26a) is configured to hold the sealing member (24b, 26b) of the same assembly tight against a portion of said rail (16).

5. Kit according to one of the preceding claims, wherein the finishing member (24a, 26a) of each assembly (24, 26) is a trim element.

6. Kit according to one of the preceding claims, wherein the finishing member (24a, 26a) of each assembly (24, 26) comprises studs (32) for bearing on said rail (16).

7. Kit according to one of the preceding claims, wherein the finishing member (24a, 26a) of each assembly (24, 26) comprises tabs (34) for hooking onto said rail.

8. Kit according to one of the preceding claims, wherein the finishing member (24a, 26a) of each assembly (24, 26) comprises a wall (30) intended to extend along said rail (16), and to cover that rail, the first finishing member (26a) being configured, when fastened to the rail, to have its wall located at a distance d1 from the rail, and the second finishing member being configured, when fastened to the rail, to have its wall located at a distance d2 from the rail which is greater than d1.

9. Kit according to one of the preceding claims, wherein the fastening elements (28) of each assembly (24, 26) comprise screws or pins configured to pass through orifices (36) of said rail (16) and to be engaged in holes in the finishing member (24a, 26a).

10. Method for covering a rail (16) of a vehicle door by means of a kit according to one of the preceding claims, comprising the steps of:
- selecting an aesthetic aspect from among the "flush" and "non-flush" aspects, and
- fastening the assembly (24, 26) corresponding to the selected aesthetic aspect on the door rail.
